# EUROPÄISCHE PATENTSCHRIFT

(11) **EP 0 515 429 B1**
(45) Veröffentlichungstag und Bekanntmachung des Hinweises auf die Patenterteilung: **28.09.1994**
(21) Anmeldenummer: 91903418.1
(22) Anmeldetag: 14.02.1991
(51) Int. Cl.: F16K 17/04, E21D 23/16

(54) **DRUCKBEGRENZUNGSVENTIL MIT STABILER FEDERAUFLAGE**
PRESSURE LIMITING VALVE WITH STABLE SPRING PAD
SOUPAPE DE LIMITATION DE PRESSION A APPUI ELASTIQUE STABLE

(30) Priorität: 22.02.1990 PL 283922
(43) Veröffentlichungstag der Anmeldung: 02.12.1992
(73) Patentinhaber: HEINRICH QUANTE BERG- UND INGENIEURTECHNIK GMBH & CO. KG, 45601 Recklinghausen (DE)
(72) Erfinder: QUANTE, Norbert, D-4320 Hattingen (DE); QUANTE, Heinrich, D-4350 Recklinghausen (DE)
(74) Vertreter: Schulte, Jörg, Dipl.-Ing.
(86) Internationale Anmeldenummer: DE9100112
(87) Internationale Veröffentlichungsnummer: WO9113280

(56) Entgegenhaltungen:
- DE-A- 3 314 837
- DE-A- 3 444 636
- DE-A- 3 830 075
- DE-B- 1 303 157
- DE-C 35 08 986

## Beschreibung

Die Erfindung betrifft ein Druckbegrenzungsventil nach dem Oberbegriff des Anspruches 1.

Derartige Druckbegrenzungsventile werden vor allem im untertägigen Bergbau eingesetzt, um hydraulische Systeme vor plötzlich auftretender Überlast, beispielsweise durch plötzliche Senkung oder Gebirgsschlag, wirksam zu schützen. Die plötzliche Schläge können den einzelnen Stempel oder auch das gesamte System so überlasten, daß eine bleibende Beschädigung oder gar Zerstörung eintritt. Die Druckbegrenzungsventile verhindern dies, indem sie bei plötzlich auftretender Überlast öffnen und Druckflüssigkeit freigeben.

Aus der DE-A 28 3o 891 ist ein Sicherheitsventil bekannt, bei dem über eine Ventilfeder, die zwischen Verschlußschraube und Ventilkolben eingespannt ist, Überdrücke im System abgebaut werden. An den Ventilteller ist dabei ein kegelförmiger Verschließkörper angeformt, der bei auftretender Überlast aus dem Ventilsitz angehoben wird. An den Ventilschließkolben ist ein Dämpfungszylinder angeformt, der die Durchströmöffnung beschränkt. Derartige Ventilschließkörper weisen nicht die notwendige Schließsicherheit auf. Außerdem kann es durch unterschiedliche Auslegung der Feder zu einer unterschiedlichen Wirkungsweise derartiger Druckbegrenzungsventile kommen.

Bei dem aus der DE-A 33 14 837 zu entnehmenden Druckbegrenzungsventil ist ein durch einen Deckel verschlossenes Ventilgehäuse vorgesehen, in dem die Ventilfeder selbst angeordnet ist. Die Ventilfeder belastet den Ventilkolben, der in dem Kolbenführungsteilin der dort ausgebildeten Kolbenbohrung verschieblich geführt ist. Die den Ventilkolben aufnehmende Bohrung weist eine Nut, in der ein O-Ring sitzt, der für die notwendige Abdichtung Sorge trägt. Der O-Ring muß durch die Radialbohrungen im Ventilkolben vollständig überfahren werden, um ein einwandfreies Öffnen des Ventils zu gewährleisten und andererseits auch um hohe Standzeiten für die O-Ring-Dichtung zu erreichen. In Höhe des Ventiltellers sind Austrittsbohrungen angeordnet, durch die das Druckmedium bei Ansprechen des Ventils ausströmen soll. Hier ist nachteilig, daß eine Umlenkung des Druckmediums mehrfach erforderlich ist, um ein Austreten aus dem Druckbegrenzungsventil zu erreichen. Aus diesem Grunde und auch wegen einer ungleichmäßigen Abstützung des Federtellers kommt es zu einem Flattern des Ventiltellers und auch zu einem Anlehnen der Ventilfeder an die Innenwand der Federhülse.

Die gattungsgemäße DE-C 35 08 986 beschreibt ein Ventil, bei dem durch geschickte Führung des Druckmediums innerhalb des Druckbegrenzungsventils eine Schonung der Innenteile und eine größere Durchflußmenge erreicht wird. Der Federteller ist auf der Unterseite abgeschrägt und in der Innenwand der Federhülse sind Kanäle vorgegeben, durch die Druckmedium an der Ventilfeder vorbeigeführt werden kann, um dann letztlich aber doch durch die Feder hindurch in die Durchgangsöffnung der Stellschraube und aus dieser in die Atmosphäre auszutreten. Nachteilig hierbei ist, daß das Druckmedium nach wie vor am Federteller vorbeiströmen muß, diesen beeinflußt und unter Umständen zu einer Schrägstellung des Federtellers beiträgt, wodurch eine ungleichmäßige Belastung der Ventilfeder auftritt.

Der Erfindung liegt die Aufgabe zugrunde, ein bleibend strömungsgünstig ausgebildetes und eine hohe Durchflußmenge ermöglichendes Druckbegrenzungsventil zu schaffen.

Die Aufgabe wird erfindungsgemäß durch die im kennzeichnenden Teil des Anspruches 1 aufgeführten Merkmale gelöst.

Bei einem derart ausgebildeten Druckbegrenzungsventil kann das Druckmedium bei Ansprechen des Ventils zunächst einmal sehr günstig am bzw. sogar letztlich durch den Federteller hindurchgeführt werden, ohne daß es eine allzugroße Umlenkung erfährt. Darüber hinaus sitzt der Kolben so weit im Federteller, das heißt in der dort ausgebildeten Sackbohrung drin, daß eine wesentlich stabilere Lage des Systems erreicht und dadurch der Kraftangriff auf den Kolben begünstigt ist. Federschiefstellungen bzw. auch Ausbauchungen können so sicher verhindert werden. Schließlich ist beim Überfahren des O-Rings dem Druckmedium ein strömungsgünstig ausgebildeter Weg vorgegeben, indem die Federhülse eine entsprechend trichterförmige Ausnehmung aufweist. Diese trichterförmige Ausnehmung setzt praktisch dicht überhalb des O-Ringes ein, so daß das Druckmedium unmittelbar nach dem Passieren der O-Ring-Dichtung durch die Radialbohrungen das Druckmedium dann auch noch gleich in der richtigen Richtung austreten kann, nämlich radial, um an den Trichterwänden entlang in Richtung Innenraum der Federhülse geführt zu werden.

Nach einer zweckmäßigen Ausbildung der Erfindung ist vorgesehen, daß der Federteller eine Auflagefläche für die Ventilfeder und eine Anlagefläche für den Kolben aufweist, die über die Höhe des Federtellers gesehen im Abstand ausgebildet sind, wobei die Auflagefläche näher zum Kolbenführungsteil und die Anlagefläche näher zur Steilschraube vorgesehen sind.

Da der Kraftangriff der Feder unterhalb des Gegenkraftangriffes des Kolbens auf den Federteller liegt, ist eine Ausknickung praktisch nicht möglich. Eine gleichmäßige Durchströmung des Federraums ist dadurch gesichert, daß die Stellschraube zusätzlich zur Durchgangsbohrung vorzugsweise zwei segmentartige Öffnungen aufweist, die einander gegenüberliegend ausgebildet sind. Die Hydraulikflüssigkeit kann somit das Ventilgehäuse zügig passieren.

Einen günstigen Kraftangriff des Federtellers auf den Kolben und eine günstige Lage dieses Kolbens wird erfindungsgemäß dadurch sichergestellt, daß die Sackbohrung im Federteller 15 bis 25 %, vorzugsweise 20 % des Kolbens aufnehmend ausgebildet ist. Der Kolben steckt somit immerhin mit einem Fünftel seiner Länge im Federteller drin, wodurch sich die beschriebene ruhige Führung für den Kolben ergibt.

Durch Verringerung der Auflagefläche des Kolbens im Federteller wird die Gelenkigkeit zwischen Kolben und Federteller verbessert. Dies wird insbesondere dadurch erreicht, daß die Sackbohrung einen halbkugelförmigen Abschluß und der Kolben eine korrespondierend abgerundete Kegelspitze aufweisen. Eine technische Begrenzung erfährt diese Maßnahme nur durch die Druckfestigkeit der aufeinander einwirkenden Werkstoffe von Federteller und Kolben. Dementsprechend ist eine weitere Optimierung dadurch gegeben, daß die von dem Abschluß bzw. der Kegelspitze gebildeten spitzen Winkel geringfügig voneinander abweichen, wobei der des Abschlusses spitzer ist. Eine optimale Gelenkigkeit zwischen Kolben und Federteller ist so erreicht.

Im Volumen praktisch beliebig große Kanäle können unterhalb des Federtellers gebildet werden, indem der Federteller auf der Unterseite mit einer in die Ausnehmung hineinragenden Ausbuchtung ausgerüstet ist, die geringere Maße als die Ausbuchtung selbst aufweist. Diese bogenförmig verlaufenden Kanäle öffnen sich dabei ausgangsseitig auch noch, so daß genügende Mengen an Druckmedium schnell abgeführt werden können. Da die Kanäle zunächst einmal genau in Richtung der Radialbohrungen des Kolbens ausgebildet sind, wird das Druckmedium ohne weitere Umlenkung aufgenommen und dann kontinuierlich über die trichterförmige Ausnehmung an die Innenwand der Federhülse herangeführt, wodurch sich ein gleichmäßiger Volumenstrom ergibt. Eine besonders günstige Führung des Druckmediums ergibt sich, wenn die Ausnehmung eine Fläche zweiter Ordnung ist und eine parabolische, hyperbolische oder elliptische Form hat. Hierdurch wird die abströmende Flüssigkeit bzw. das Druckmedium kontrolliert umgelenkt und sehr gleichmäßig in den Federraum hineingeführt. Hier ist noch einmal darauf hinzuweisen, daß das Druckmedium bei einer derartigen Ausbildung quasi aus den Radialbohrungen herausgeführt wird und so umgelenkt wird, daß Druckverluste praktisch nicht auftreten.

Weitere Verbesserungen sind zu erwarten, wenn der die Ausnehmung bildende Rotationsparaboloid einen Zylinder als Rotationszentrum hat, wobei die Parabel auf der Außenfläche eines dem Kolben nahezu entsprechenden, gedachten Kolbens rotiert. Damit wird das System des Scheinwerfers für ein strömendes Druckmedium übernommen, wodurch die weiter oben schon beschriebenen Vorteile erreicht werden können.

Beim Ansprechen des Druckbegrenzungsventil strömt eine große Menge Druckmedium in kurzer Zeit in den Federraum. Um hier einen Rückstau zu vermeiden, sieht die Erfindung vor, daß in der Federhülse im Bereich der Stellschraube radial angesetzte Austrittsbohrungen vorgesehen sind. Das Druckmedium kann so durch die Durchgangsbohrung in der Stellschraube hindurch austreten und gleichzeitig durch die beschriebenen Austrittsbohrungen, die in entsprechender Anzahl in der Federhülse ausgebildet sind.

Derartige Druckbegrenzungsventile können vorteilhaft auch in Einzelstempelventilen zum Einsatz kommen, wobei eine optimale Schonung dadurch erreicht ist, daß die Federhülse die Stellschraube umschließend kugelig ausgebildet ist, wobei eine mit der Durchgangsbohrung korrespondierende Ausgangsbohrung vorgesehen ist. So ist für den Raubschlüssel ein gleichmäßiger Kraftangriff vorgegeben, so daß Abplatzer und/oder Einkerbungen verhindert werden. Darüber hinaus ist durch diese Maßnahme die Stellschraube für den Federdruck geschützt und von außen nicht beziehungsweise nur gewollt zugänglich. Darüber hinaus gibt diese besondere Ausbildung der Federhülse eine immer gleichmäßige Außenfläche vor, auch dann, wenn die Stellschraube einmal extrem weit eingeschraubt sein sollte.

Nach einer zweckmäßigen Ausbildung der Erfindung ist vorgesehen, daß der Federteller einen viereckigen oder dreieckigen Grundriß aufweist. Bei einer derartigen Ausbildung des Federtellers ergeben sich die vorteilhaften Durchströmöffnungen zwangsweise und gleichmäßig über den Umfang verteilt, so daß auch hierdurch bei günstigen Durchströmwerten eine ruhige Lage des Federtellers sichergestellt ist.

Die Durchströmöffnungen können gezielt vergrößert werden, indem der eckige Federteller zwischen seinen Ecken zum Federtellermittelpunkt weisende Ausbuchtungen aufweist. Dabei können diese Ausbuchtungen auch abgeschrägte Wände bekommen, so daß eine noch bessere Führung des Druckmediums beim Ansprechen des Ventils gegeben ist.

Statt der geschlossenen Federhülse nach oben ist es auch möglich, eine durchgehende Öffnung vorzusehen, in der die Stellschraube über ein Gewinde hin- und hergeschoben werden kann. Dann ist es zweckmäßig, wenn die Stellschraube ein Innengewinde aufweist, in das ein aus Kunststoff bestehender Schraubschutzstopfen mit korrespondierendem Gewinde und mittigem Kreuzschlitz eingeschraubt ist.

Zur schnelleren und sichereren Montage des Ventils ist vorgesehen, daß Federhülse und Kolbenführungsteil über einen Rastverschluß gegeneinander festgelegt sind. Damit erübrigt sich das Aufbringen des Außen- und Innengewindes bei Federhülse und Kolbenführung. Vielmehr ist es lediglich erforderlich, für den Rastverschluß entsprechende Ausnehmungen in beiden Teilen vorzusehen, wobei als besonders zweckmäßig angesehen wird, daß der Rastverschluß von einem Verschlußring und einer korrespondierend in der Federhülse ausgebildeten rillenförmigen ersten Ausnehmung sowie einer im geringen Abstand dazu im Kolbenführungsteil angeordneten zweiten Ausnehmung gebildet ist, wobei im Schließzustand der Verschlußring je hälftig in der ersten Ausnehmung und der zweiten Ausnehmung, die zur ersten Ausnehmung abgeschrägt ist, eingefügt ist. Durch einfaches Verschieben kann so eine Verspannung bzw. Verbindung beider Teile, d.h. der Federhülse und der Kolbenführung bewirkt werden bzw. auch ein Auseinanderziehen, wenn nämlich die beiden Teile so ineinandergeschoben bzw. gezogen werden, daß der Verschlußring in die entsprechend große Ausnehmung hineinfällt.

Die Erfindung zeichnet sich insbesondere dadurch aus, daß durch die besondere Ausbildung des Federtellers und der Kolbenführung mit der trichterförmigen Ausnehmung eine günstige Führung des Druckmediums bei Ansprechen des Ventils gewährleistet ist. Dieses Druckmedium wird praktisch beim Austritt aus den Radialbohrungen des Kolbens schon aufgenommen und gezielt geführt, quasi durch den Ventilteller hindurchgeleitet und kann dann in den Federraum eindringen, um nach dessen Ausfüllung aus der Durchgangsbohrung und den Ausgangsbohrungen in die Atmosphäre auszutreten. Das Druckmedium trifft dabei randseitig auf den Federteller, der aber dennoch sicher gelagert ist und eine gleichmäßige Kraftübertragung gewährleistet, weil der Federteller eine entsprechende Ausnehmung aufweist und hierin den Kolben sicher aufnehmen und führen kann. Aufgrund der günstigen Führung des Druckmediums und der besonderen Ausbildung des Druckbegrenzungsventlls können Durchflußmengen von 1oo l und mehr erreicht werden.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: ein Druckbegrenzungsventil entsprechend der Erfindung im Längsschnitt mit parabolisch ausgebildeter Ausnehmung im Kolbenführungsteil,
- Fig. 2: ein Druckbegrenzungsventil im Schnitt, ohne entsprechend erfindungsgemäße Ausnehmung aber mit weit in den Federteller eingreifendem Kolben,
- Fig. 3: einen Schnitt durch das Druckbegrenzungsventil gemäß Fig. 2 mit Federteller,
- Fig. 4: eine andere Ausbildung des Federtellers
- Fig. 5: einen Schnitt durch ein Druckbegrenzungsventil, bei dem der Federteller eine in die Ausnehmung hineinreichende Ausbuchtung aufweist,
- Fig. 6: die Stellschraube in Draufsicht,
- Fig. 7: einen Schraubschutzstopfen in Seitenansicht,
- Fig. 8: den Schraubschutzstopfen in geschlossenem Zustand in Draufsicht,
- Fig. 9: den Schraubschutzstopfen in Seitenansicht in geöffnetem Zustand,

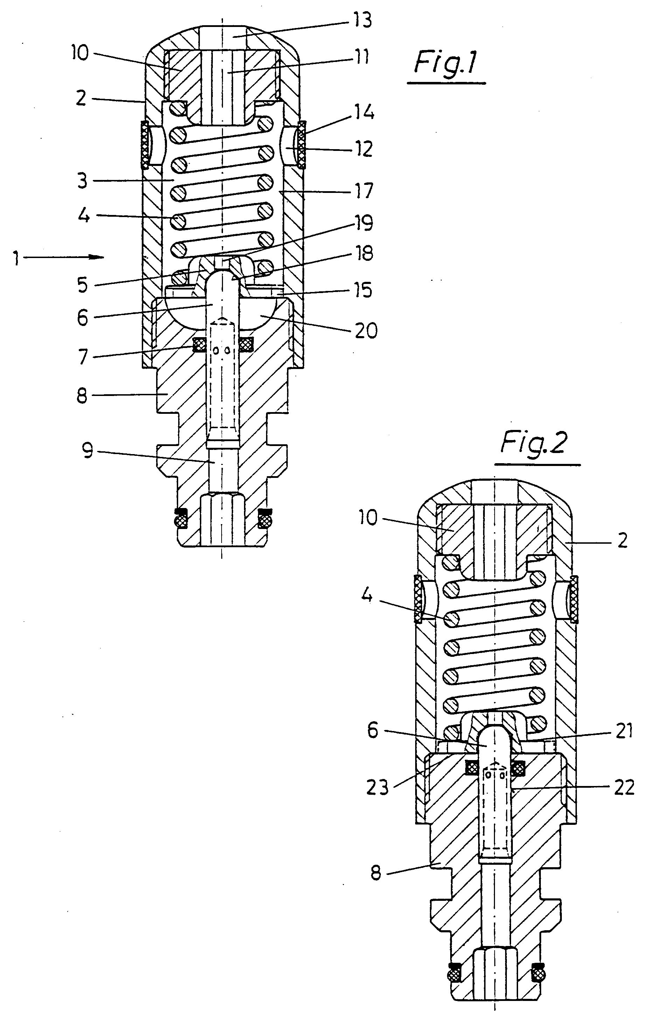

- Fig. 1o: den Schraubschutzstopfen in Draufsicht in geöffnetem Zustand und

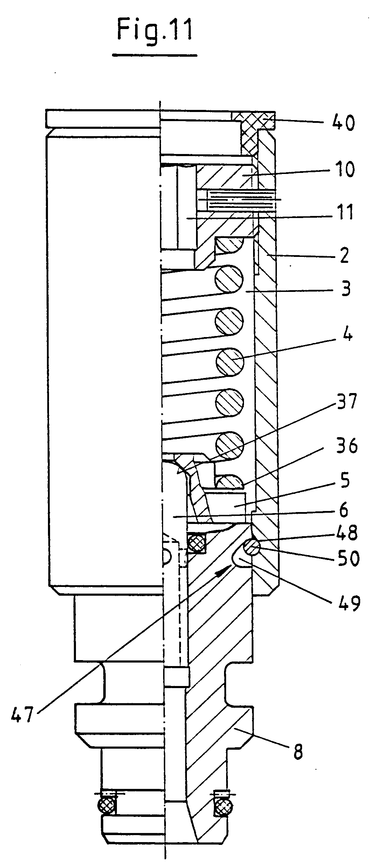

- Fig. 11: einen Längsschnitt durch ein Druckbegrenzungsventil mit Rastverschluß.

Das aus Fig. 1 ersichtliche Druckbegrenzungsventil (1) besteht aus der Federhülse (2), in deren Federraum (3) die Ventilfeder (4) angeordnet ist. Diese Ventilfeder (4) stützt sich einmal auf dem unteren Federteller (5) ab, so daß der Kolben (6) entsprechend in der Kolbenbohrung (9) fixiert ist und andererseits an der Stellschraube (1o). Die Kolbenbohrung (9) ist im Kolbenführungsteil (8) ausgebildet, wobei diese Kolbenbohrung (9) über eine Nut verfügt, in der ein O-Ring (7) aus Abdichtungszwecken untergebracht ist.

In der Stellschraube (1o) ist eine Durchgangsbohrung untergebracht, durch die einmal die Stellschraube (1o) selbst verstellt werden kann, um so den Druck der Ventilfeder (4) zu verändern und durch die andererseits das Druckmedium bei Ansprechen des Ventils austreten kann. Außerdem sind Austrittsbohrungen (12) radial angeordnet, um so einen Rückstau im Federraum (3) zu verhindern. Diese radialen Austrittsbohrungen (12) sind durch eine Staubsicherung (14) abgedeckt, hier in Form eines Gummirings. Denkbar ist aber auch die Anordnung eines Federringes oder ähnlicher Abdichtungselemente.

Mit (13) ist die Ausgangsbohrung in der Federhülse (2) bezeichnet, die notwendig ist, um die Stellschraube (1o) zu betätigen und um das Druckmedium, das die Durchgangsbohrung (11) passiert hat, nun auch aus dem Bereich der Federhülse (2) herauszubringen.

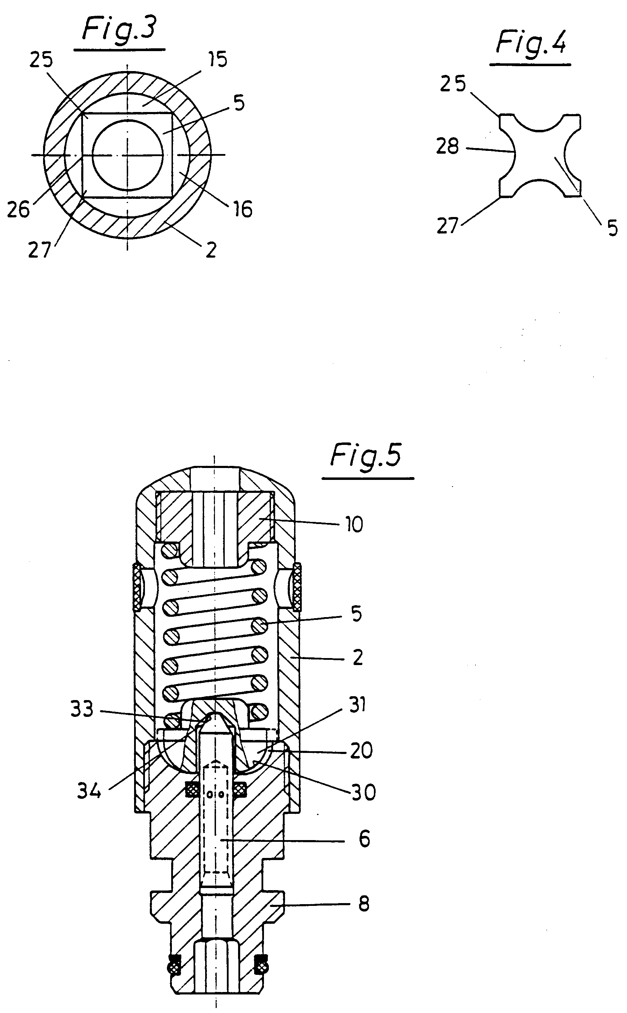

Der Federteller (5) weist Durchströmöffnungen (15, 16) auf, die in Fig. 3 und 4 noch näher erläutert sind. Diese Durchströmöffnungen (15, 16) sorgen dafür, daß das Druckmedium nach Passieren des Federtellers (5) an der Innenwand (17) entlang durch den Federraum (3) durchströmen kann.

Der Federteller (5) ist mit einer Sackbohrung (18) ausgerüstet, die eine Tiefe aufweist, die etwa 2o % des Kolbens (6) aufnimmt. Durch die große Eintauchtiefe des Kolbens (6) in den Federteller (5) wird eine stabilere Lage des Systems erreicht und dadurch der Kraftangriff auf den Kolben begünstigt. Dadurch werden Federschiefstellungen beziehungsweise Ausbauchungen sicher vermieden.

Die den Kolben (6) aufnehmende Bohrung ist als kombinierte Sack- und Stufenbohrung (18, 19) ausgebildet, wobei der Kolben weit über den Ansatz (21) der gerade verlaufenden Flanken (22) in den Federteller (5) eintauchen soll. Eine entsprechende Ausbildung zeigt auch Fig. 2.

Während nach Fig. 2 der Bereich (23), der den Boden des Federraums (3) bildet, gerade verläuft, so daß das Druckmedium hier im Bereich Übergang Federteller (5)/Federraum (3) sehr ungünstig umgelenkt werden muß, sehen die Fig. 1 und 5 eine Ausbildung vor, bei der im Bereich (23) eine parabolisch ausgebildete Ausnehmung (2o) befindet. Die entsprechend gebogene Fläche der Ausnehmung (2o) bringt eine günstige Führung des Druckmediums nach Verlassen der Radialbohrungen im Kolben (6).

Fig. 3 zeigt eine Draufsicht auf einen Federteller (5), wobei deutlich wird, daß dieser quadratisch ausgebildet ist und zwar so, daß zwischen den Ecken (25, 27) Durchströmöffnungen (15, 16) entstehen. Diese Durchströmöffnungen können nach Fig. 4 noch dadurch optimiert werden, daß die zwischen den Ecken (25, 27) bestehende Fläche (26) eine entsprechende Ausbuchtung (28) erhält, wobei auch Formen denkbar sind, die von der gemäß Fig. 4 abweichen.

Fig. 5 entspricht im wesentlichen der Fig. 3, wobei hier allerdings auf der Unterseite (3o) des Federtellers (5) eine Ausbuchtung (31) so ausgebildet ist, daß sie entsprechend weit in die Ausnehmung (2o) hineinreicht. Sie bildet nun mit den Flächen der Ausnehmung (2o) ein Kanalsystem, durch das das Druckmedium ähnlich der Ausführung nach Fig. 1 strömungsgünstig abgeleitet wird.

Unterschiedlich gegenüber der Fig. 1 ist außerdem, daß hier der Abschluß (33) der Sackbohrung (18) und die Kegelspitze (34) eine besondere Form aufweisen. Der Kolben (6) ist oben kegelförmig ausgebildet und an der Kegelspitze abgerundet und zwar so, daß die Auflagefläche verringert wird. Die kegelförmige Ausnehmung mit der Ausbuchtung (31) korrespondiert mit der Kegelspitze (34) des Kolbens (6) insofern, als letztere in der Spitze einen geringfügig spießwinkligeren Winkel einschließt. Dadurch wird die Gelenkigkeit zwischen Kolben (6) und Federteller (5) verbessert.

Diese besondere Ausbildung des Druckbegrenzungsventils insbesondere mit der besonderen Führung des Federtellers ermöglicht es, längere Federn zu verwenden. Derartige Federn sind mit der entsprechenden Kennlinie besser herstellbar und haben höhere Standzeiten. Auch die Dauerbelastungswerte sind wesentlich günstiger.

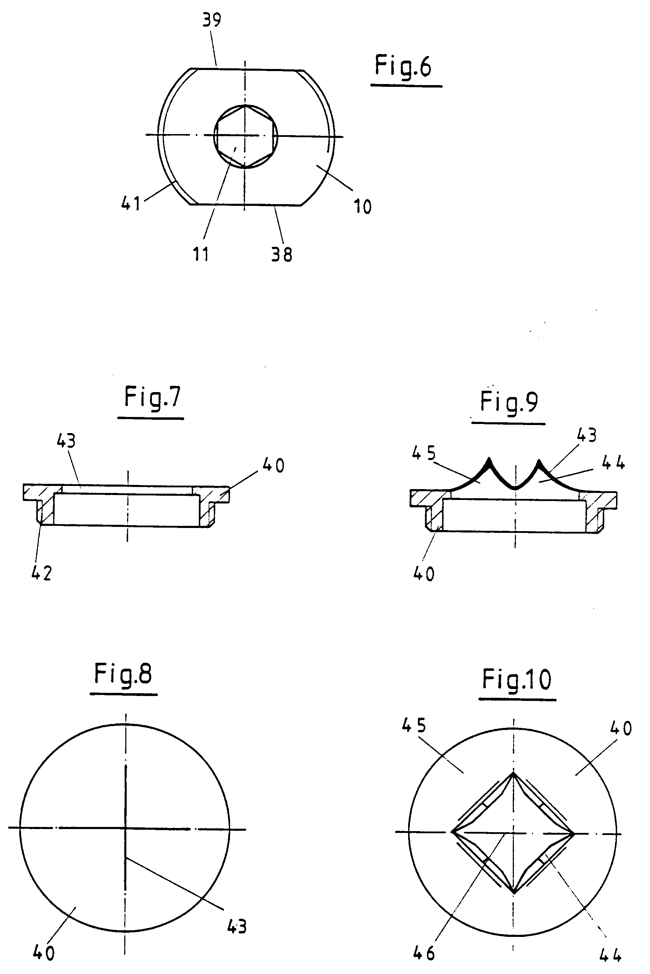

Fig. 6 zeigt eine Stellschraube (1o) in Draufsicht, wobei hier zusätzlich zur Durchgangsbohrung (11) zwei segmentartige Öffnungen (38, 39) vorgesehen sind, durch die Hydraulikflüssigkeit nach außen austreten kann. Diese Stellschraube (1o) ist mit einem Stellschraubengewinde (41) versehen, so daß sie bei der aus Fig. 11 ersichtlichen Ausführung von oben her in die Federhülse (2) eingeschraubt werden kann.

Die Fig. 7, 8, 9 und 1o zeigen einen Schraubschutzstopfen (4o), bestehend aus Kunststoff, der, ebenso wie die Stellschraube (1o) von oben her in die Federhülse (2) eingeschraubt werden kann. Hierzu weist dieser Schraubschutzstopfen (4o) ein Gewinde (42) auf, das dem Stellschraubengewinde (41) entspricht. Mittig ist ein Kreuzschlitz (43) vorgesehen, der so gewählt ist, daß die verschiedenen Lappen (44, 45) während des Normalbetriebes das Eindringen von Staub in den Federraum (3) verhindern. Spricht das Druckbegrenzungsventil (1) dagegen an, so öffnet die Hydraulikflüssigkeit die Lappen (44, 45), biegt diese nach außen, so daß die aus Fig. 9 und 1o ersichtliche Öffnung (46) entsteht, durch die das Druckmedium leicht entweichen kann.

In Fig. 11 ist verdeutlicht, daß die Auflagefläche (36) der Ventilfeder (4) unterhalb der Anlage (37) des Kolbens (6) liegt, so daß eine optimale Führung der Ventilfeder (4) gewährleistet ist. Die Auflagefläche (36) auf dem Federteller (5) verläuft waagerecht, so daß die Ventilfeder (4) sicher aufliegt.

Fig. 11 zeigt ein Druckbegrenzungsventil, bei dem die Federhülse (2) und das Kolbenführungsteil (8) über einen Rastverschluß (47) miteinander verbunden sind. Dieser Rastverschluß (47) wird dadurch gebildet, daß dicht übereinander rillenförmige Ausnehmungen (48, 49) vorgesehen sind. Die in Fig. 11 obere Ausnehmung (48) ist je hälftig in dem Kolbenführungstell (8) und in der Federhülse (2) ausgebildet, während die untere rillenförmige Ausnehmung (49) ganz in der Kolbenführung (8) ausgebildet ist. Hierdurch kann durch entsprechendes Hochschieben des Kolbenführungsteils (8) gegen die Kraft der Ventilfeder (4) der Verschlußring (50) in die größere rillenförmige Ausnehmung (49) geschoben werden, woraufhin dann beide Teile, d.h. Federhülse (2) und Kolbenführungsteil (8) ohne Probleme auseinandergezogen werden können. Beim umgekehrten Vorgang rutscht der Verschlußring (50) durch das Herunterdrücken des Kolbenführungsteils mit Hilfe der Ventilfeder (4) in die geteilte rillenförmige Ausnehmung (48) hinein und beide Teile sind wirksam miteinander verbunden. Dieser Vorgang wird durch die obere Schräge der Ausnehmung (49) begünstigt. Der Verschlußring (50) ist in Fig. 11 im eingespannten Zustand wiedergegeben.

## Patentansprüche

1. Druckbegrenzungsventil mit einem durch eine O-Ring-Dichtung (7) gesteuerten Kolben (6), der über eine Ventilfeder (4) gesichert ist, die sich an einem auch den Kopf des Kolbens aufnehmenden Federteller (5) und einem Gegenfederteller abstützt, der als Stellschraube (10) ausgebildet ist und eine Durchgangsbohrung aufweist, wobei der Kolben (6) in einer Kolbenbohrung (9) geführt ist, die in einem Kolbenführungsteil (8) angeordnet ist, an dem eine die Ventilfeder (4) umhüllende Federhülse (2) angebracht ist, um mit dieser den Federraum (3) zu bilden, der vom Druckmedium vom Kolbenführungsteil kommend in Richtung Stellschraube durchströmt wird, **dadurch gekennzeichnet,** daß der Federteller (5) eckig ausgebildet ist und als Durchströmöffnungen (15, 16) dienende Ausnehmungen aufweist, daß der Kolben (6) auch mit seinen gerade verlaufenden Flanken (22) in eine Sackbohrung (18) eintaucht, die in dem Federteller (5) angebracht ist und korrespondierende gerade verlaufende Flanken aufweist, daß das Kolbenführungsteil (8) im den Boden des Federraums (3) bildenden Bereich (23) eine trichterförmige Ausnehmung (20) aufweist, die bis in die Innenwand (17) der Federhülse (2) herausreicht.

2. Druckbegrenzungsventil nach Anspruch 1, **dadurch gekennzeichnet,** daß der Federteller (5) eine Auflagefläche (36) für die Ventilfeder (4) und eine Anlagefläche (37) für den Kolben (6) aufweist, die über die Höhe des Federtellers gesehen im Abstand ausgebildet sind, wobei die Auflagefläche (36) näher zum Kolbenführungsteil (8) und die Anlagefläche (37) näher zur Stellschraube (10) vorgesehen sind.

3. Druckbegrenzungsventil nach Anspruch 1, **dadurch gekennzeichnet,** daß die Stellschraube (10) zusätzlich zur Durchgangsbohrung (11), vorzugsweise zwei segmentartige Öffnungen (38, 39) aufweist, die einander gegenüberliegend ausgebildet sind.

4. Druckbegrenzungsventil nach Anspruch 1, **dadurch gekennzeichnet,** daß die Sackbohrung (18) im Federteller (5) 15 bis 25 %, vorzugsweise 20 % des Kolbens (6) aufnehmend ausgebildet ist.

5. Druckbegrenzungsventil nach Anspruch 1, **dadurch gekennzeichnet,** daß die Sackbohrung (18) einen halbkugelförmigen Abschluß (33) und der Kolben (6) eine korrespondierend abgerundete Kegelspitze (34) aufweist.

6. Druckbegrenzungsventil nach Anspruch 5, **dadurch gekennzeichnet,** daß die von dem Abschluß (33) bzw. der Kegelspitze (34) gebildeten spitzen Winkel geringfügig voneinander abweichen, wobei der des Abschlusses (33) spitzer ist.

7. Druckbegrenzungsventil nach Anspruch 1, **dadurch gekennzeichnet,** daß der Federteller (5) auf der Unterseite (30) mit einer in die Ausnehmung (20) hineinragenden Ausbuchtung (31) ausgerüstet ist, die geringere Maße als die Ausnehmung selbst aufweist.

8. Druckbegrenzungsventil nach Anspruch 1, **dadurch gekennzeichnet,** daß die Ausnehmung (20) eine Fläche zweiter Ordnung ist und eine parabolische, hyperbolische oder eliptische Form hat.

9. Druckbegrenzungsventil nach Anspruch 8, **dadurch gekennzeichnet,** daß der die Ausnehmung (20) bildende Rotationsparaboloid einen Zylinder als Rotationszentrum hat, wobei die Parabel auf der Außenfläche eines dem Kolben (6) nahezu entsprechenden, gedachten Kolbens rotiert.

10. Druckbegrenzungsventil nach Anspruch 1, **dadurch gekennzeichnet,** daß in der Federhülse (2) im Bereich der Stellschraube (10) radial angesetzte Austrittsbohrungen (12) vorgesehen sind.

11. Druckbegrenzungsventil nach Anspruch 1, **dadurch gekennzeichnet,** daß die Federhülse (2) die Stellschraube (10) umschließend kugelig ausgebildet ist, wobei eine mit der Durchgangsbohrung (11) korrespondierende Ausgangsbohrung (13) vorgesehen ist.

12. Druckbegrenzungsventil nach Anspruch 1, **dadurch gekennzeichnet,** daß der Federteller (5) einen viereckigen oder dreieckigen Grundriß aufweist.

13. Druckbegrenzungsventil nach Anspruch 1 oder Anspruch 12, **dadurch gekennzeichnet,** daß der eckige Federteller (5) zwischen seinen Ecken (25, 27) zum Federtellermittelpunkt weisende Ausbuchtungen (28) aufweist.

14. Druckbegrenzungsventil nach Anspruch 1, **dadurch gekennzeichnet,** daß die Stellschraube (10) ein Innengewinde (41) aufweist, in das ein aus Kunststoff bestehender Schraubschutzstopfen (40) mit korrespondierendem Gewinde (42) und mittigem Kreuzschlitz (43) eingeschraubt ist.

15. Druckbegrenzungsventil nach Anspruch 1, **dadurch gekennzeichnet,** daß Federhülse (2) und Kolbenführungsteil (8) über einen Rastverschluß (47) gegeneinander festgelegt sind.

16. Druckbegrenzungsventil nach Anspruch 15, **dadurch gekennzeichnet,** daß der Rastverschluß (47) von einem Verschlußring (50) und einer korrespondierend in der Federhülse (2) ausgebildeten rillenförmigen ersten Ausnehmung (48) sowie einer im geringen Abstand dazu im Kolbenführungsteil (8) angeordneten zweiten Ausnehmung (49) gebildet ist, wobei im Schließzustand der Verschlußring (50) je hälftig in der ersten Ausnehmung (48) und zweiten Ausnehmung (49), die zur ersten Ausnehmung abgeschrägt ist, eingefügt ist.

## Claims

1. Pressure relief valve with a piston (6) which is controlled by an O-ring seal (7) and is protected by a valve spring (4) resting on a spring plate (5) also receiving the head of the piston and an opposing spring plate which is designed as an adjusting screw (10) and has a through-bore, wherein the piston (6) is guided in a piston bore (9) arranged in a piston guide member (8) on which a spring sleeve (2) surrounding the valve spring (4) is arranged so as to form therewith the spring chamber (3) which is permeated by the pressure medium coming from the piston guide member in the direction of the adjusting screw, characterised in that the spring plate (5) is polygonal in design and has recesses serving as through-orifices (15, 16), that the piston (6) is also immersed with its rectilinearly extending flanks (22) into a blind bore (18) which is arranged in the spring plate (5) and has corresponding rectilinearly extending flanks, that the piston guide member (8) has, in the region (23) forming the base of the spring chamber (3), a funnel-shaped recess (20) which extends into the internal wall (17) of the spring sleeve (2).

2. Pressure relief valve according to claim 1,
characterised in that the spring plate (5) has a supporting surface (36) for the valve spring (4) and a contact surface (37) for the piston (6) which are spaced, as viewed over the height of the spring plate, the supporting surface (36) being provided closer to the piston guide member (8) and the contact surface (37) closer to the adjusting screw (10).

3. Pressure relief valve according to claim 1,
characterised in that the adjusting screw (10) has, in addition to the through-bore (11), preferably two segmentlike orifices (38, 39) which are designed to face one another.

4. Pressure relief valve according to claim 1,
characterised in that the blind bore (18) in the spring plate (5) is designed to receive 15 to 25%, preferably 20% of the piston (6).

5. Pressure relief valve according to claim 1,
characterised in that the blind bore (18) has a hemispherical end (33) and the piston (6) a correspondingly rounded cone tip (34).

6. Pressure relief valve according to claim 5,
characterised in that the acute angles formed by the end (33) and the cone tip (34) differ slightly from one another, that of the end (33) being more acute.

7. Pressure relief valve according to claim 1,
characterised in that the spring plate (5) is equipped, on the underside (30), with a bay (31) which penetrates into the recess (20) and has smaller dimensions than the recess itself.

8. Pressure relief valve according to claim 1,
characterised in that the recess (20) is a second order face and has a parabolic, hyperbolic or elliptical shape.

9. Pressure relief valve according to claim 8,
characterised in that the paraboloid of rotation forming the recess (20) has a cylinder as its centre of rotation, the parabola rotating on the external surface of an imaginary piston almost corresponding to the piston (6).

10. Pressure relief valve according to claim 1,
characterised in that radially set outlet bores (12) are provided in the spring sleeve (2) in the region of the adjusting screw (10).

11. Pressure relief valve according to claim 1,
characterised in that the spring sleeve (2) is spherical in design so as to surround the adjusting screw (10), an exit bore (13) corresponding to the through-bore (11) being provided.

12. Pressure relief valve according to claim 1,
characterised in that the spring plate (5) has a rectangular or triangular outline.

13. Pressure relief valve according to claim 1 or claim 12,
characterised in that the polygonal spring plate (5) has bays (28) directed toward the centre of the spring plate between its corners (25, 27).

14. Pressure relief valve according to claim 1,
characterised in that the adjusting screw (10) has an internal thread (41) into which a screw protective stopper (40) with a corresponding thread (42) and central recessed cross (43) consisting of plastics material is screwed.

15. Pressure relief valve according to claim 1,
characterised in that the spring sleeve (2) and piston guide member (8) are fixed to one another by a catching lock (47).

16. Pressure relief valve according to claim 15,
characterised in that the catching lock (47) is formed by a locking ring (50) and a groove-shaped first recess (48) correspondingly formed in the spring sleeve (2) as well as a second recess (49) arranged at a short distance from it in the piston guide member (8), half of the locking ring (50) being respectively inserted in the first recess (48) and second recess (49), which is bevelled toward the first recess, in the closed state.

## Revendications

1. Valve de limitation de pression, comprenant un piston (6) qui est commandé en traversant une garniture (7) formée d'un joint torique et qui est immobilisé par un ressort de valve (4) qui prend appui sur une coupelle de ressort (5), servant aussi à loger la tête du piston, et sur une coupelle de ressort complémentaire qui est réalisée sous la forme d'une vis de réglage (10) et comporte un perçage de passage, tandis que le piston (6) est guidé dans un alésage de piston (9) qui est ménagé dans une pièce de guidage de piston (8) sur laquelle est monté un manchon de ressort (2) qui entoure le ressort de valve (4), de façon à délimiter avec ce manchon la chambre de ressort (3) qui est traversée par le fluide de pression, provenant de la pièce de guidage de piston, en direction de la vis de réglage, caractérisée en ce que la coupelle de ressort (5) est polygonale et comporte des évidements servant d'orifices de passage (15, 16), en ce que le piston (6) s'enfonce aussi par ses flancs (22) à orientation rectiligne dans un trou borgne (18) qui est ménagé dans la coupelle de ressort (5) et comporte des flancs à profil rectiligne correspondants, en ce que la pièce de guidage de piston (8) comporte, dans la zone (23) formant le fond de la chambre de ressort (3), un évidement (20) en forme de godet qui s'étend jusqu'à l'endroit de la paroi intérieure (17) du manchon de ressort (2).

2. Valve de limitation de pression selon la revendication 1, caractérisée en ce que la coupelle de ressort (5) comporte une surface (36) d'appui du ressort de valve (4) et une surface (37) d'appui du piston (6) qui sont situées à distance l'une de l'autre dans le sens de la hauteur de la coupelle de ressort, la surface (36) d'appui du ressort étant prévue plus près de la partie de guidage de piston (8) et la surface (37) d'appui de piston plus près de la vis de réglage (10).

3. Valve de limitation de pression selon la revendication 1, caractérisée en ce qu'en sus du perçage de passage (11), la vis de réglage (10) comporte de préférence deux ouvertures (38, 39) en forme de segment qui sont diamétralement opposées l'une à l'autre.

4. Valve de limitation de pression selon la revendication 1, caractérisée en ce que le trou borgne (18) ménagé dans la coupelle de ressort (5) est réalisé de façon à loger 15 à 25 %, de préférence 20 %, du piston (6).

5. Valve de limitation de pression selon la revendication 1, caractérisée en ce que le trou borgne (18) comporte un fond (33) de forme hémisphérique et le piston (6) comporte une pointe de cône (34) présentant une forme arrondie correspondante.

6. Valve de limitation de pression selon la revendication 5, caractérisée en ce que les angles aigus formés respectivement par le fond (33) et par la pointe de cône (34) sont légèrement différents l'un de l'autre, celui du fond (33) étant plus aigu.

7. Valve de limitation de pression selon la revendication 1, caractérisée en ce que, sur sa face inférieure (30), la coupelle de ressort (5) est pourvue d'une partie bombée (31) qui s'engage dans l'évidement (20) et qui a des dimensions plus faibles que celles de cet évidement lui-même.

8. Valve de limitation de pression selon la revendication 1, caractérisée en ce que l'évidement (20) est une surface du second degré et a une forme parabolique, hyperbolique ou elliptique.

9. Valve de limitation de pression selon la revendication 8, caractérisée en ce que le paraboloïde de révolution constituant l'évidement (20) a un cylindre pour centre de rotation, la parabole tournant sur la surface extérieure d'un piston imaginaire correspondant presque au piston (6).

10. Valve de limitation de pression selon la revendication 1, caractérisée en ce que des perçages de sortie (12) sont prévus dans le manchon de ressort (2) en étant disposés radialement dans la zone de la vis de réglage (10).

11. Valve de limitation de pression selon la revendication 1, caractérisée en ce que le manchon de ressort (2) a une forme sphérique entourant la vis de réglage (10) et en ce qu'il est prévu un perçage de sortie (13) correspondant au perçage de passage (11).

12. Valve de limitation de pression selon la revendication 1, caractérisée en ce que la coupelle de ressort (5) a un contour carré ou triangulaire.

13. Valve de limitation de pression selon l'une des revendications 1 et 12, caractérisée en ce qu'entre ses sommets (25, 27), la coupelle de ressort (5) polygonale comporte des évidements (28) se dirigeant vers le point central de la coupelle de ressort.

14. Valve de limitation de pression selon la revendication 1, caractérisée en ce que la vis de réglage (10) comporte un filetage intérieur (41) dans lequel est vissé un bouchon de protection de vis (40) en matière plastique qui comporte un filetage correspondant (42) et une empreinte centrale cruciforme (43).

15. Valve de limitation de pression selon la revendication 1, caractérisée en ce que le manchon de ressort (2) et la pièce de guidage de piston (8) sont immobilisés l'un vis-à-vis de l'autre au moyen d'une fermeture à enclenchement (47).

16. Valve de limitation de pression selon la revendication 15, caractérisée en ce que la fermeture à enclenchement (47) est constituée d'une bague de fermeture (50), d'un premier évidement (48), en forme de gorge et ménagé d'une manière correspondante dans le manchon de ressort (2), et d'un second évidement (49) ménagé dans la pièce de guidage de piston (8) à une faible distance du premier évidement et en ce qu'en position de fermeture, la bague de fermeture (50) est emboîtée par moitié respectivement dans le premier évidement (48) et le second évidement (49), lequel est chanfreiné en direction du premier évidement.
